# EUROPEAN PATENT SPECIFICATION

(11) **EP 3 462 340 B1**
(45) Date of publication and mention of the grant of the patent: **26.08.2020**
(21) Application number: 17194087.7
(22) Date of filing: 29.09.2017
(51) Int. Cl.: G06F 16/83

(54) **DATA PROVIDER AND METHOD FOR PROVIDING DATA**
DATENANBIETER UND VERFAHREN ZUR BEREITSTELLUNG VON DATEN
FOURNISSEUR DE DONNÉES ET PROCÉDÉ DE FOURNITURE DE DONNÉES

(43) Date of publication of application: 03.04.2019
(73) Proprietor: Siemens Aktiengesellschaft, 80333 München (DE)
(72) Inventor: Charpenay, Victor, 81677 München (DE); Käbisch, Sebastian, 86163 Augsburg (DE)

(56) References cited:
- US-A1- 2014 201 196
- US-B2- 7 765 469
- SIMING YANG ET AL: "Ontology Based Service Discovery Method for Internet of Things", INTERNET OF THINGS (ITHINGS/CPSCOM), 2011 INTERNATIONAL CONFERENCE ON AND 4TH INTERNATIONAL CONFERENCE ON CYBER, PHYSICAL AND SOCIAL COMPUTING, IEEE, 19 October 2011 (2011-10-19), pages 43-47, XP032107180, DOI: 10.1109/ITHINGS/CPSCOM.2011.104 ISBN: 978-1-4577-1976-9
- MAARALA ALTTI ILARI ET AL: "Semantic data provisioning and reasoning for the Internet of Things", 2014 INTERNATIONAL CONFERENCE ON THE INTERNET OF THINGS (IOT), IEEE, 6 October 2014 (2014-10-06), pages 67-72, XP032732593, DOI: 10.1109/IOT.2014.7030117 [retrieved on 2015-02-03]
- Giancarlo Fortino ET AL: "Internet of Things Based on Smart Objects: Technology, Middleware and Applications" In: "Internet of Things Based on Smart Objects: Technology, Middleware and Applications", 16 April 2014 (2014-04-16), Springer, XP055436878, ISBN: 978-3-319-00490-7 * page 2 * * page 20 - page 21 *

## Description

### TECHNICAL FIELD

The disclosed embodiments relate to methods for providing data in response to a data request message.

### BACKGROUND

The development of the Semantic Web has put considerable focus on data and the relationships between data on the Web. In the vision of the Semantic Web, data should be shared and reused across application and domain boundaries. Relationships among data on the Web should also be made available in order to create an Internet of Things.

One of the challenges in the Internet of Things is the data integration of different application domains. However, different domains relies on own existing and established data models and protocols. Developing of cross-domain applications is, therefore, highly challenging due to a co-existence of multiple data models.

A Web of Things interest group of the World Wide Web Consortium (W3C) is tackling this challenge by providing technical building blocks for bridging isolated domain applications. One major field of endeavor is a machine interpretable semantic description of communication interfaces and data models for readily setting up interactions for, e.g. plug-and-play scenarios. Currently, the Web of Things interest group develops a technical building block entitled »Thing Description« or TD, which is relying on an RDF or »Resource Description Framework« paradigm for conceptually modeling data implemented in web resources, using data serialization formats such as »JavaScript Object Notation for Linked Data« or JSON-LD.

Typically, once a collection of RDF data about resources has been stored this data is subjected to queries. RDF query languages can be used to write expressions that are evaluated against one or more RDF graphs in order to produce, for example, a narrowed set of statements, resources, or object values, or to perform comparisons and operations on such items. Although several query languages for RDF data have emerged, the majority of RDF data are queried using the emerging de facto standard SPARQL.

SPARQL (a recursive acronym for SPARQL Protocol and RDF Query Language) is a query language for databases able to retrieve and manipulate data stored in a Resource Description Framework (RDF) format. RDF is a data model describing resources in the form of triples, i.e. subject-predicate-object expressions. While the subject denotes the resource, the predicate denotes traits or aspects of the resource, expressing a relationship between the subject and the object.

Conventional implementations of queries are capable of executing a semantic search within the Thing Description. However, such queries are currently not capable of delivering data from a data provider - or server - to a data requester - or client - in a particular data format requested by the data requester.

Accordingly there is a need in the art for enabling a request for data characterized by a semantic expression and receiving a data structure in response to the request being in conformance with a data structure as requested by the query.

### SUMMARY

Embodiments for providing data as described herein generally involve responding to a data request message.

In one embodiment a computer-implemented method for providing data is suggested, wherein a data request message submitted to a data provider is received. The data request message is expressed in a query language for RDF or Resource Description Framework. The data request message comprises a query section and a pattern definition. The query section is referencing one or more semantically enriched data models for semantically querying at least one property name of at least one data element of a sensor device. The pattern definition defines a data structure requested for a response of the data provider. The data provider is then querying at least one property name - or a semantic expression in general - in at least one of the semantically enriched data models which are referenced in the query section. Consequently, the data provider receives one or more references for said one or more data elements in response to said query. The data provider is then retrieving one or more data values of said one or more data elements, whereby these data values are expressed by the data provider within the data structure. In other words, the data provider may enter the data values into the right positions within the data structure requested for its response. The data provider is then generating a result message providing said data structure and sending the result message as a response to the instance which had initiated the data request message.

According to an embodiment, the semantically enriched data models comprise a Thing Description, a Resource Description Framework store or a micro Resource Description Framework store.

According to an embodiment, the data request message is substantially expressed in a SPARQL language.

According to an embodiment, the pattern definition of the requested data structure is at least partially expressed in a JSON language, a JSON-LD language, and/or an XML language.

According to an embodiment, querying at least one property name in at least one of the semantically enriched data models includes a semantic search using a SPARQL query initiated by the by the data provider.

According to an embodiment, retrieving of one or more data values includes at least one separate data communication initiated by the data provider.

According to an embodiment, retrieving of one or more data values is carried out in a Resource Description Framework store or in a micro Resource Description Framework store.

According to an embodiment, retrieving of one or more data values is carried out using a function call.

According to an embodiment, retrieving of one or more data values includes an act of making a function call and extracting one or more data values from an response to the function call.

According to an embodiment, retrieving of one or more data values includes an act of invoking an application programming interface and extracting one or more data values from a result returned by the application programming interface.

According to an embodiment, the pattern definition of a requested data structure includes a SPARQL CONSTRUCT function.

According to an embodiment, the data provider is a server or a »servient«. A servient is an entity, which is occasionally acting as server and/or client. Specifically, in the context of Web of Things, a servient denotes an addressable application endpoint of an entity or »Thing« that makes it interactive by providing a Web-of-Things-Interface and means to execute application logic.

According to another embodiment a data provider comprising a processor and a data storage device having stored thereon a computer executable program code is provided. The data storage device may be implemented within or external to the processor.

According to a further embodiment a non-transitory computer-readable storage medium having stored thereon computer executable program code is provided.

### DESCRIPTION OF THE DRAWING

The objects as well as further advantages of the present embodiments will become more apparent and readily appreciated from the following description of the preferred embodiments, taken in conjunction with the accompanying drawing accompanying drawing of which:
- FIG. 1: shows a block diagram of various entities for processing a data request message according to an embodiment of the invention; and;
- FIG. 2: shows a block diagram of various entities for processing a data request message according to the State of the Art.

### DETAILED DESCRIPTION

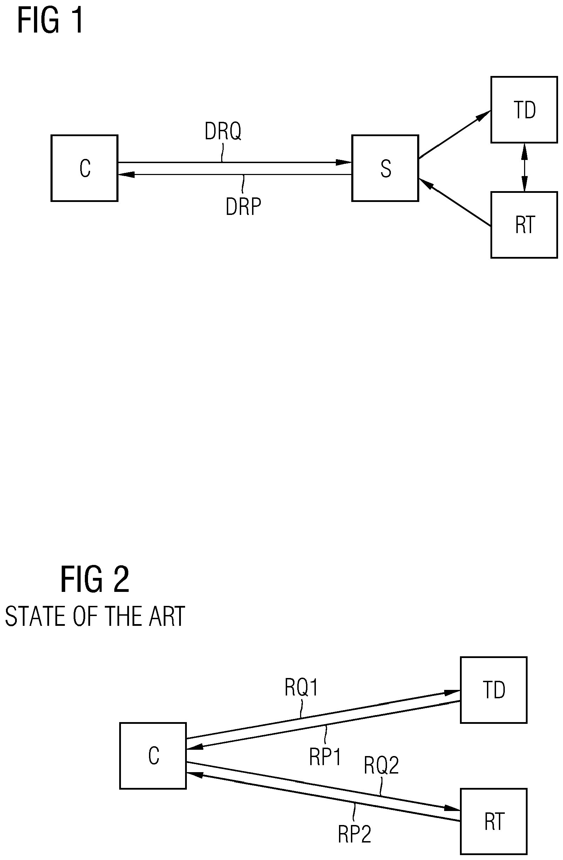

FIG 2 illustrates a currently practiced method of querying data according to the State of the Art. In an exemplary use case it is assumed that a data requester or client C in a Web of Things (WoT) environment requires a temperature value of a temperature sensor, which is, according to the WoT principles, an entity or »Thing«.

The central idea of WoT is that Things can describe their capabilities and metadata in a machine-understandable format using vocabularies from ontologies. A description of a Thing is provided by a Thing Description TD, e.g. by a Resource Description Framework document or RDF-document including semantic and functional descriptions of a Thing.

In order to discover functional properties of the temperature sensor the client C initiates a semantic based search by a first request message RQ1, in order to query a required sensor device by its description. The request message RQ1 is usually formulated in a query language like SPARQL.

A response RP1 delivered by an engine for querying the Thing Description TD is subsequently sent to the client. The response RP1 delivers, however, a Thing, e.g. a temperature service from a temperature sensor which is able to deliver the required temperature value. However, the service may have a different data structure format for delivering the temperature value, which does not necessarily match to the format required by the client. Still further, the response RP1 may not provide the actual temperature value, since the Thing Description TD may only contain structural and semantic data about its Things described therein. A further message pair RQ2,RP2 exchange between the client C and a real time data source RT is required, using the structural information about the service gained by parsing the data received by the preceding response message RP2. A »direct« communication between the client C and the Thing Description TD for receiving a value in a format required by the client C is not possible.

In the following, an exemplary Thing Description snippet is shown:

```
 {
     "@context":
          "http://w3c.github.io/wot/w3c-wot-td-context.jsonld",
          {"sensor": "http://example.org/sensors#"}
     ],
     "@type": "Thing",
     "name": "MyTemperatureThing",
     "uris": ["coap://www.mytemp.com:5683/"],
     "encodings": ["JSON"],
     "properties": [{
          "@type": "sensor:Temperature",
          "name": "My Temperature",
          "sensor:unit": "sensor:Celsius",
          "valueType": {
               "temp": {
               "modelReference": "http://example.org/temperatureValue",
               "type": "number"
          },
     "timestamp": {
     "modelReference": "http://example.org/sampleTime",
     "type": "string"
     }
     },
     "writable": false,
     "hrefs": ["t"]
     }]
 }
```

A Thing captioned by a name »TemperatureThing« has a property of the type »sensor:Temperature« captioned by a name »My Temperature« which is able to deliver a value in a structure format, including a temperature »temp« and a time information »timestamp«.

SPARQL can be used as a query language to make a semantic based search, e.g., for imitating a look up for some required sensor devices and/or required data. However, there is an obstacle in the data exchange between the client C and the provider for the Thing Description TD regarding the data format required by the client C.

This is explained by a particular data request: Client C, knowing of the capabilities of the service »TemperatureThing« according to semantic context in the reference »http://example.org/temperatureValue« requires a temperature value with a specific data structure format:

```
 {
     "temperature" : number
     }
```

wherein only the temperature value of a data type is required in a format »number«.

Based on a Thing Description Query, a service »TemperatureThing« is provided, e.g. offered by a temperature sensor, which is able to deliver this required value. However, the service has a different output structure format:

```
 {
     "temp" : number,
     "timestamp" : string
     }
```

which delivers additional metadata of a timestamp along with the temperature »temp« as structured in the Thing Description shown above. This kind of delivered data structure does not match with the required format of the client C.

Present implementations of data requests have to provide suitable transformations of data format and structure into a target representation format. These implementations are necessary within a development phase, thereby considerably limiting the flexibility in setting up IoT services which are introduced at a later phase. Alternatively, gateways are used to provide transformations into already known formats. This would, however, involve further efforts in maintenances when data formats are subject to change or new formats are introduced.

Embodiments according to the invention eliminate these drawbacks in the present state of the art by disclosing a method for receiving a single response in response to a single query with a data structure being in exact conformance with a data structure as requested by a query.

FIG. 1 shows a block diagram of a data request according to an embodiment of the invention. A data request message DRQ of a client C is answered by a response message DRP sent from a data provider S to client C.

The data provider S is not necessarily to be regarded as an additionally required component in comparison to FIG. 2. The functionality of a data provider S in this sense may be also delivered by an engine or SPARQL endpoint for querying the Thing Description TD as in the case of FIG. 2. In FIG. 1 a separate entity of a data provider S is depicted for the reason of emphasizing its character as a single point of communication in view of the client C. The data provider S may, alternatively, be part of the engine or endpoint for querying the Thing Description TD.

The data provider S receives the data request message DRQ, initiates a query in the Thing Description TD, retrieves one or more data values in a real time data repository RT and express the data values within a data structure as requested by the data request DRQ. The data structure is then sent to the client.

The data request message DRQ comprises a query section referencing the Thing Description - or one or more other semantically enriched data models - for semantically querying at least one property name of at least one data element. Thus, the embodiments rely on the Web of Things idea that each Thing which serves data, e.g., temperature values, has a semantic description such as the W3C Thing Description TD and uses established and/or standardized vocabularies and/or ontologies. Query mechanism can be used such as SPARQL where a client can find the Things and their services which are able to deliver the requested data.

The engine or SPARQL endpoint for querying the Thing Description TD can be provided by a Thing via an RDF store or µRDF store (»micro RDF store«) for microcontroller systems with limited resources - in terms of memory, bandwidth and/or processing capability - managing only a latest Thing Description.

Subsequently, without referencing to FIG. 1, a possible attempt of receiving a particular data value of interest by the client is figured out.

In order to query a Thing - or to check a Thing whether it can provide relevant information such as a temperature value - a SPARQL query as follows might be used:

```
 PREFIX "sensor": http://example.org/sensors#
 SELECT *
 WHERE
     { ?t < hasProperty> ?p
       ?p a <sensor:Temperature>
     }
```

This SPARQL query inquires the Thing Description TD of a Thing, whether the Thing has a property that relies on a temperature sensor, which is semantically described by »sensor:Temperature«. According to the Thing Description in the sample code shown further above, there is a property of the type »sensor:Temperature«, the property having the name »My Temperature«.

In a subsequent step the client C could identify within the Thing Description TD for the found property »My Temperature« that the used data model structure would result into a mismatch compared to the own expected data structure format, see the explanations on differences between required and delivered data structures above.

However, based on the knowledge of semantic enrichment of all provided data elements within the property »My Temperature« - e.g., the data element »temp" has a semantic annotation of »http://example.org/temperatureValue« by the »modelReference« assignment in the sample code of the Thing Description shown further above - the client C would be able to determine in which data element it is exclusively interested in.

Leaving the conceptual preliminary considerations and turning back to an embodiment according to FIG. 1, it is to be stated as an object of the invention to provide a single response message DRP in response to a single request message DRQ delivering a data structure being in conformance with a data structure as requested by the request message DRQ.

According the embodiments' approach a usage of existing semantic search mechanism such as SPQARL for the request message DRQ is combined with a pattern definition of a requested data structure for responding the data request message. Consequently, the data structure provided by the data provider S by its response message DRP is in such a way that it can be properly processed by the client C.

This object is accomplished according to the present embodiments by a composed request message DRQ comprising a query section and a pattern definition of a requested data structure for responding the data request message DRQ.
Below, an example of such a composed request message DRQ is shown:

```
 CONSTRUCT {
     {
     "temperature": _val
     }
     } WHERE
     { ?t < hasProperty> ?p
       ?p a <Temperature>
       ?p <valueType> ?vt
       ?p <http://example.org/temperatureValue> _val
       }
```

In this composed request message DRQ, the pattern definition of a requested data structure for responding the data request message DRQ is made in the section:

```
     {
     "temperature": _val
     }
     and the query section is expressed by the following section:
 } WHERE
     { ?t < hasProperty> ?p
       ?p a <Temperature>
       ?p <valueType> ?vt
       ?p <http://example.org/temperatureValue> _val
 }
```

wherein the client C requests a service for a temperature value based on the semantic meaning of »http://example.org/temperatureValue«.

The data provider S is querying the property name <Temperature> in the Thing Description TD and receiving a reference for said data elements in response to said query.

The data provider S is then retrieving a data value of the data element with the property <Temperature> within the real time data source RT, receiving the data value and expressing the data value within the data structure. The data provider S is specifically embedding the data value reflected by »_val« within the provided pattern definition - which is a JSON skeleton in the exemplary message - within the SPARQL instruction CONSTRUCT. The requested data structure defined by the pattern definition shown above is a simple number in this case. However, it is possible to define complex data structures as well.

After the data value is embedded within the required data structure, the data structure is inserted into the response message DRP and sent to the client C. The client C is able to directly extract and process the desired data structure. A possible returned data structure returning a value of 22.1 is shown below:

```
 {
 "temperature" : 22.1
 }
```

The data value may be a runtime value retrieved from the real time data source RT. There are other options of retrieving data values or runtime values: Either from a RDF store in cases where the runtime values are also reflected there or the data values are determined based on the Thing Description guideline and its associated engine for querying the Thing Description TD, which may be a Scripting API building block.

This approach shows the difference of a classic SPARQL search which only applies on RDF triples such as provided in a Thing Description TD. The Thing Description TD itself, however, does not provide runtime data.

According to the state of the art as shown in FIG. 2, a separate communication interaction had to be initiated in order to receive the data values. Even worse, according to the state of the art, the data values received by the separate communication interaction had not been expressed by a required data structure format.

The inventive approach, in contrast, reduces formerly required multiple communication interaction and data processing to an exchange of only one message pair DRQ,DRP, readily receiving requested data in a desired data structure format and relying on Semantic Web technologies such as RDF and SPARQL.

The processing steps from a perspective of the data provider S - e.g. a regular SPARQL endpoint based on a WoT Thing Description approach - are as follows:
1. Process query triples in usual SPARQL manner;
2. If there is a SPARQL CONSTRUCT and a non-triple result pattern defined and, e.g., a JSON or XML skeleton defined
   a. Retrieve the requested data element and the data values of this data element within an RDF Store (if existing) OR make an internal function call (in case of an action definition within the Thing Description for the searched information) OR read properties where the semantic value context match (executed e.g. by a WoT Scripting API building block);
   b. Assign the data values into the data structure pattern by comparing the provided semantic terms.

In summary the embodiments have further advantages as follows:
- No particular data conversion has to be defined at development time;
- Unnecessary data transmission (e.g. timestamp) is avoided in favor of less network traffic;
- Thing/data discovery and data value request is done in one step;
- Flexible usage is granted for any cross-domain application;
- Embodiments are also feasible for constrained devices with limited resources.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for providing data, the method including the steps of:
- receiving, by a data provider, from a client, a data request message expressed in a query language for a Resource Description Framework, the data request message comprising,
- a query section referencing one or more semantically enriched data models for semantically querying at least one property name of at least one data element of a sensor device, and,
- a pattern definition of a requested data structure for responding the data request message;
- querying, by the data provider, at least one property name in at least one of the semantically enriched data models;
- receiving, by the data provider, one or more references for said one or more data elements of the sensor device in response to said querying;
- retrieving, by the data provider, one or more data values of said one or more data elements and expressing said one or more data values within said data structure; wherein the one or more data values are runtime values and retrieved from a real time data source (RT) and;
- generating, by the data provider, a result message providing said data structure, the result message representing a response to the data request message; and
sending, by the data provider, the result message to the client.

2. The method according to claim 1, wherein said semantically enriched data models include a Thing Description, a Resource Description Framework store and/or a micro Resource Description Framework store.

3. The method according to claim 1, wherein said data request message is substantially expressed in a SPARQL language.

4. The method according to claim 1, wherein said pattern definition of said requested data structure is at least partially expressed in:
- a JSON or binary JSON language;
- and/or;
- an XML or binary XML language.

5. The method according to claim 1, wherein querying at least one property name in at least one of the semantically enriched data models includes a semantic search using a SPARQL query by the data provider.

6. The method according to claim 1, wherein said retrieving of one or more data values includes at least one separate data communication initiated by the data provider.

7. The method according to claim 1, wherein said retrieving of one or more data values is carried out in a Resource Description Framework store or in a micro Resource Description Framework store.

8. The method according to claim 1, wherein said retrieving of one or more data values is carried out using a function call.

9. The method according to claim 1, wherein said retrieving of one or more data values includes an act of making a function call and extracting one or more data values from an response to the function call.

10. The method according to claim 1, wherein said retrieving of one or more data values includes an act of invoking an application programming interface and extracting one or more data values from a result returned by the application programming interface.

11. The method according to claim 3, wherein said pattern definition of a requested data structure includes a CONSTRUCT function.

12. The method according to claim 1, wherein said data provider is a server or a servient.

13. A data provider comprising:
- a processor; and;
- a data storage device having stored thereon computer executable program code, which, when executed by the processor, causes the processor to:
- receive, from a client, a data request message expressed in a query language for a Resource Description Framework, the data request message comprising,
- a query section referencing one or more semantically enriched data models for semantically querying at least one property name of at least one data element of a sensor device, and,
- a pattern definition of a requested data structure for responding the data request message;
- query at least one property name in at least one of the semantically enriched data models;
- receive one or more references for said one or more data elements of the sensor device in response to said querying;
- retrieve one or more data values of said one or more data elements and expressing said one or more data values within said data structure; wherein the one or more data values are runtime values and retrieved from a real time data source (RT) and
- generate a result message providing said data structure, the result message representing a response to the data request message; and
- send the result message to the client.

14. A non-transitory computer-readable storage medium having stored thereon computer executable program code, which, when executed by a computer, causes the computer to:
- receive, from a client, a data request message expressed in a query language for a Resource Description Framework, the data request message comprising,
- a query section referencing one or more semantically enriched data models for semantically querying at least one property name of at least one data element of a sensor device, and,
- a pattern definition of a requested data structure for responding the data request message;
- query at least one property name in at least one of the semantically enriched data models;
- receive one or more references for said one or more data elements of a sensor device in response to said querying;
- retrieve one or more data values of said one or more data elements and expressing said one or more data values within said data structure; wherein the one or more data values are runtime values and retrieved from a real time data source (RT) and
- generate a result message providing said data structure, the result message representing a response to the data request message; and
- send the result message to the client.

## Patentansprüche

1. Computerimplementiertes Verfahren zur Bereitstellung von Daten, wobei das Verfahren die folgenden Schritte umfasst:
- Empfangen, durch einen Datenanbieter, von einem Client, einer in einer Abfragesprache für ein Resource Description Framework ausgedrückten Datenanforderungsnachricht, wobei die Datenanforderungsnachricht Folgendes umfasst:
- einen Abfrageabschnitt, der auf ein oder mehr semantisch angereicherte Datenmodelle zum semantischen Abfragen mindestens eines Eigenschaftsnamens von mindestens einem Datenelement einer Sensoreinrichtung verweist, und
- eine Musterdefinition einer angeforderten Datenstruktur zum Beantworten der Datenanforderungsnachricht,
- Abfragen, durch den Datenanbieter, mindestens eines Eigenschaftsnamens in mindestens einem der semantisch angereicherten Datenmodelle,
- Empfangen, durch den Datenanbieter, von ein oder mehr Verweisen für die ein oder mehr Datenelemente der Sensoreinrichtung als Antwort auf das Abfragen,
- Abrufen, durch den Datenanbieter, von ein oder mehr Datenwerten der ein oder mehr Datenelemente und Ausdrücken der ein oder Datenwerten innerhalb der Datenstruktur, wobei die ein oder mehr Datenwerte Laufzeitwerte sind und von einer Echtzeit-Datenquelle (RT) abgerufen werden, und
- Erzeugen, durch den Datenanbieter, einer Ergebnisnachricht, die die Datenstruktur bereitstellt, wobei die Ergebnisnachricht eine Antwort auf die Datenanforderung darstellt, und
- Senden, durch den Datenanbieter, der Ergebnisnachricht an den Client.

2. Verfahren nach Anspruch 1, wobei die semantisch angereicherten Datenmodelle eine Thing Description, einen Resource Description Framework-Store und/oder einen Mikro-Resource Description Framework-Store einschließen.

3. Verfahren nach Anspruch 1, wobei die Datenanforderung in Wesentlichen in einer SPARQL-Sprache ausgedrückt ist.

4. Verfahren nach Anspruch 1, wobei die Musterdefinition der angeforderten Datenstruktur mindestens teilweise ausgedrückt ist in:
- einer JSON- oder binären JSON-Sprache
und/oder
- einer XML- oder binären XML-Sprache.

5. Verfahren nach Anspruch 1, wobei das Abfragen mindestens eines Eigenschaftsnamens in mindestens einem der semantisch angereicherten Datenmodelle eine semantische Suche unter Verwendung einer SPARQL-Abfrage durch den Datenanbieter einschließt.

6. Verfahren nach Anspruch 1, wobei das Abrufen von ein oder mehr Datenwerten mindestens eine von dem Datenanbieter veranlasste separate Datenkommunikation einschließt.

7. Verfahren nach Anspruch 1, wobei das Abrufen von ein oder mehr Datenwerten in einem Resource Description Framework-Store oder in einem Mikro-Resource Description Framework-Store ausgeführt wird.

8. Verfahren nach Anspruch 1, wobei das Abrufen von ein oder mehr Datenwerten unter Verwendung eines Funktionsaufrufs ausgeführt wird.

9. Verfahren nach Anspruch 1, wobei das Abrufen von ein oder mehr Datenwerten einen Schritt zum Durchführen eines Funktionsaufrufs und Extrahieren von ein oder mehr Datenwerten aus einer Antwort auf den Funktionsaufruf einschließt.

10. Verfahren nach Anspruch 1, wobei das Abrufen von ein oder mehr Datenwerten einen Schritt zum Aufrufen einer Anwendungsprogrammierschnittstelle und Extrahieren von ein oder mehr Datenwerten aus einem von der Anwendungsprogrammierschnittstelle zurückgegebenen Ergebnis einschließt.

11. Verfahren nach Anspruch 3, wobei die Musterdefinition einer angeforderten Datenstruktur eine CONSTRUCT-Funktion einschließt.

12. Verfahren nach Anspruch 1, wobei der Datenanbieter ein Server oder ein Servient ist.

13. Datenanbieter, der Folgendes umfasst:
- einen Prozessor und
- eine Datenspeichereinrichtung mit darauf gespeichertem computerausführbarem Programmcode, der, wenn er ausgeführt wird, den Prozessor veranlasst:
- von einem Client eine in einer Abfragesprache für ein Resource Description Framework ausgedrückte Datenanforderungsnachricht zu empfangen, wobei die Datenanforderungsnachricht Folgendes umfasst:
- einen Abfrageabschnitt, der auf ein oder mehr semantisch angereicherte Datenmodelle zum semantischen Abfragen mindestens eines Eigenschaftsnamens von mindestens einem Datenelement einer Sensoreinrichtung verweist, und
- eine Musterdefinition einer angeforderten Datenstruktur zum Beantworten der Datenanforderungsnachricht,
- mindestens einen Eigenschaftsnamen in mindestens einem der semantisch angereicherten Datenmodelle abzufragen,
- ein oder mehr Verweise für die ein oder mehr Datenelemente der Sensoreinrichtung als Antwort auf das Abfragen zu empfangen,
- ein oder mehr Datenwerte der ein oder mehr Datenelemente abzurufen und die ein oder Datenwerte innerhalb der Datenstruktur auszudrücken, wobei die ein oder mehr Datenwerte Laufzeitwerte sind und von einer Echtzeit-Datenquelle (RT) abgerufen werden, und
- eine Ergebnisnachricht zu erzeugen, die die Datenstruktur bereitstellt, wobei die Ergebnisnachricht eine Antwort auf die Datenanforderungsnachricht darstellt, und
- die Ergebnisnachricht an den Client zu senden.

14. Nicht-transitorisches, computerlesbares Speichermedium mit darauf gespeichertem computerausführbarem Programmcode, der, wenn er durch einen Computer ausgeführt wird, den Computer veranlasst:
- von einem Client eine in einer Abfragesprache für ein Resource Description Framework ausgedrückte Datenanforderungsnachricht zu empfangen, wobei die Datenanforderungsnachricht Folgendes umfasst:
- einen Abfrageabschnitt, der auf ein oder mehr semantisch angereicherte Datenmodelle zum semantischen Abfragen mindestens eines Eigenschaftsnamens von mindestens einem Datenelement einer Sensoreinrichtung verweist, und
- eine Musterdefinition einer angeforderten Datenstruktur zum Beantworten der Datenanforderungsnachricht,
- mindestens einen Eigenschaftsnamen in mindestens einem der semantisch angereicherten Datenmodelle abzufragen,
- ein oder mehr Verweise für die ein oder mehr Datenelemente der Sensoreinrichtung als Antwort auf das Abfragen zu empfangen,
- ein oder mehr Datenwerte der ein oder mehr Datenelemente abzurufen und die ein oder Datenwerte innerhalb der Datenstruktur auszudrücken, wobei die ein oder mehr Datenwerte Laufzeitwerte sind und von einer Echtzeit-Datenquelle (RT) abgerufen werden,
- eine Ergebnisnachricht zu erzeugen, die die Datenstruktur bereitstellt, wobei die Ergebnisnachricht eine Antwort auf die Datenanforderungsnachricht darstellt, und
- die Ergebnisnachricht an den Client zu senden.

## Revendications

1. Procédé mis en œuvre par ordinateur destiné à la fourniture de données, le procédé comprenant les étapes suivantes :
- la réception, par un fournisseur de données, à partir d'un client, d'un message de demande de données exprimé en un langage de requête pour une infrastructure de description de ressource, le message de demande de données comprenant,
- une section de requête faisant référence à un ou plusieurs modèles de données sémantiquement enrichis destinés à la requête sémantique d'au moins un nom de propriété d'au moins un élément de données d'un dispositif capteur, et
- une définition de motif d'une structure de données demandée destinée à répondre au message de demande de données,
- la requête, par le fournisseur de données, d'au moins un nom de propriété dans au moins un des modèles de données sémantiquement enrichis,
- la réception, par le fournisseur de données, d'une ou de plusieurs références pour lesdits un ou plusieurs éléments de données du dispositif capteur en réponse à ladite requête,
- la récupération, par le fournisseur de données, d'une ou de plusieurs valeurs de données desdits un ou plusieurs éléments de données et l'expression desdites une ou plusieurs valeurs de données à l'intérieur de ladite structure de données, les unes ou plusieurs valeurs de données étant des valeurs d'exécution et récupérées à partir d'une source de données en temps réel (RT) et,
- la génération, par le fournisseur de données, d'un message de résultat fournissant ladite structure de données, le message de résultat représentant une réponse au message de demande de données, et
- l'envoi, par le fournisseur de données, du message de résultat au client.

2. Procédé selon la revendication 1, dans lequel lesdits modèles de données sémantiquement enrichis comprennent une description de chose, un espace mémoire d'infrastructure de description de ressource et/ou un micro-espace mémoire d'infrastructure de description de ressource.

3. Procédé selon la revendication 1, dans lequel ledit message de demande de données est substantiellement exprimé en un langage SPARQL.

4. Procédé selon la revendication 1, dans lequel ladite définition de motif de ladite structure de données demandée est au moins partiellement exprimée en :
- un langage JSON ou JSON binaire,
- et/ou
- un langage XML ou XML binaire.

5. Procédé selon la revendication 1, dans lequel la requête pour au moins un nom de propriété dans au moins un des modèles de données sémantiquement enrichis comprend une recherche sémantique au moyen d'une requête SPARQL par le fournisseur de données.

6. Procédé selon la revendication 1, dans lequel ladite récupération d'une ou de plusieurs valeurs de données comprend au moins une communication de données distincte lancée par le fournisseur de données.

7. Procédé selon la revendication 1, dans lequel ladite récupération d'une ou de plusieurs valeurs de données est exécutée dans un espace mémoire d'infrastructure de description de ressource ou dans un micro-espace mémoire d'infrastructure de description de ressource.

8. Procédé selon la revendication 1, dans lequel ladite récupération d'une ou de plusieurs valeurs de données est exécutée au moyen d'un appel de fonction.

9. Procédé selon la revendication 1, dans lequel ladite récupération d'une ou de plusieurs valeurs de données comprend une action de réalisation d'un appel de fonction et d'extraction d'une ou de plusieurs valeurs de données d'une réponse à la fonction appel.

10. Procédé selon la revendication 1, dans lequel ladite récupération d'une ou de plusieurs valeurs de données comprend une action d'invocation d'une interface de programmation d'application et d'extraction d'une ou de plusieurs valeurs de données d'un résultat renvoyé par l'interface de programmation d'application

11. Procédé selon la revendication 3, dans lequel ladite définition de motif d'une structure de données demandée comprend une fonction CONSTRUCT.

12. Procédé selon la revendication 1, dans lequel ledit fournisseur de données est un serveur ou un desservant.

13. Fournisseur de données comprenant :
- un processeur, et,
- un dispositif de conservation en mémoire de données possédant, conservé en mémoire sur celui-ci, du code de programme exécutable par ordinateur, qui, lorsqu'il est exécuté par le processeur, amène le processeur à :
- recevoir, à partir d'un client, un message de demande de données exprimé en un langage de requête pour une infrastructure de description de ressource, le message de demande de données comprenant :
- une section de requête faisant référence à un ou plusieurs modèles de données sémantiquement enrichis pour la requête sémantique d'au moins un nom de propriété d'au moins un élément de données d'un dispositif capteur, et,
- une définition de motif d'une structure de données demandée destinée à répondre au message de demande de données,
- exécuter une requête pour au moins un nom de propriété dans au moins un des modèles de données sémantiquement enrichis,
- recevoir une ou plusieurs références pour lesdits un ou plusieurs éléments de données du dispositif capteur en réponse à ladite requête,
- récupérer une ou plusieurs valeurs de données desdits un ou plusieurs éléments de données et exprimer lesdites une ou plusieurs valeurs de données à l'intérieur de ladite structure de données, les un ou plusieurs valeurs de données étant des valeurs d'exécution et récupérées à partir d'une source de données en temps réel (RT) et
- générer un message de résultat fournissant ladite structure de données, le message de résultat représentant une réponse au message de demande de données, et
- envoyer le message de résultat au client.

14. Support à mémoire lisible par ordinateur non transitoire possédant, conservé en mémoire sur celui-ci, du code de programme exécutable par ordinateur qui, lorsqu'il est exécuté par un ordinateur, amène l'ordinateur à :
- recevoir, à partir d'un client, un message de demande de données exprimé en un langage de requête pour une infrastructure de description de ressource, le message de demande de données comprenant :
- une section de requête faisant référence à un ou plusieurs modèles de données sémantiquement enrichis pour la requête sémantique d'au moins un nom de propriété d'au moins un élément de données d'un dispositif capteur, et
- une définition de motif d'une structure de données demandée destinée à répondre au message de demande de données,
- exécuter une requête pour au moins un nom de propriété dans au moins un des modèles de données sémantiquement enrichis,
- recevoir une ou plusieurs références pour lesdits un ou plusieurs éléments de données d'un dispositif capteur en réponse à ladite requête,
- récupérer une ou plusieurs valeurs de données desdits un ou plusieurs éléments de données et exprimer lesdites une ou plusieurs valeurs de données à l'intérieur de ladite structure de données, les une ou plusieurs valeurs de données étant des valeurs d'exécution et récupérées à partir d'une source de données en temps réel (RT) et
- générer un message de résultat fournissant ladite structure de données, le message de résultat représentant une réponse au message de demande de données, et
- envoyer le message de résultat au client.
